# EUROPÄISCHE PATENTSCHRIFT

(11) **EP 3 538 307 B1**
(45) Veröffentlichungstag und Bekanntmachung des Hinweises auf die Patenterteilung: **22.01.2025**
(21) Anmeldenummer: 17808751.6
(22) Anmeldetag: 08.11.2017
(51) Int. Cl.: B23B 29/12

(54) **ULTRASCHALL-SYSTEM, VERFAHREN ZUR AUSLEGUNG EINES ULTRASCHALL-SYSTEMS UND EISENHALTIGES BAUTEIL**
ULTRASONIC SYSTEM, METHOD FOR DESIGNING AN ULTRASONIC SYSTEM AND IRON-CONTAINING COMPONENT
SYSTÈME À ULTRASONS, PROCÉDÉ DE CONCEPTION D'UN SYSTÈME À ULTRASONS ET COMPOSANT FERREUX

(30) Priorität: 08.11.2016 DE 102016013202; 30.11.2016 DE 102016014253
(43) Veröffentlichungstag der Anmeldung: 18.09.2019
(73) Patentinhaber: InnoLite GmbH, 52070 Aachen (DE)
(72) Erfinder: WENZEL, Christian, 52074 Aachen (DE); DE SIMONE, Daniel, 52066 Aachen (DE)
(74) Vertreter: Patentanwälte Hemmer Lindfeld Frese Partnerschaft mbB
(86) Internationale Anmeldenummer: PCT/DE2017/000377
(87) Internationale Veröffentlichungsnummer: WO 2018/086646

(56) Entgegenhaltungen:
- DE-A1- 102008 022 993
- DE-A1- 102009 027 688
- DE-B3- 102014 005 543
- US-A- 4 646 595
- US-A1- 2010 086 369

## Beschreibung

Die Erfindung betrifft ein Ultraschallsystem zur zerspanenden Bearbeitung, ein Verfahren zur Auslegung eines Ultraschall-Systems und ein eisenhaltiges Bauteil.

Ultraschallschwinger werden für die zerspanende und spanabhebende Bearbeitung wie Drehen oder Hobeln zur Bearbeitung mit monokristallinem und polykristallinem Diamant oder herkömmlicher Schneidplatten eingesetzt. Derartige Systeme werden insbesondere zur Bearbeitung eisenhaltiger Bauteile verwendet.

Es existieren Ultraschallsysteme zur Zerspanung der Firma Taga mit Schwingfrequenzen von ca. 40 kHz und der Firmen Son-x (UT S2) und Innolite (ILSonic) mit ca. 100 kHz.

Alle Systeme bestehen aus einem Werkzeug, das in der Regel einen Diamant mit Wendeschneidplatte aufweist, einem Piezoerreger mit zugehöriger Elektronik und einer Sonotrode. Die Sonotrode ist bei allen bekannten Systemen ein Transversalschwinger, der ggf. noch longitudinale Anteile mit in sich trägt. Das System der Firma Taga nutzt 4 Piezoerreger die gegeneinander abgestimmt werden. Die Firmen Son-x und Innolite verwenden jeweils nur einen Erreger und eine Sonotrode.

Die Werkzeuganregung erfolgt in der DE 10 2008 022 993 Al für ein Fräsverfahren durch einen longitudinal schwingenden Piezoerreger, der eine longitudinale Schwingung im Werkzeughalter (Sonotrode) induziert. Die Erfindung betrifft jedoch Ultraschall-Systeme, bei denen in einem auskragenden Teil der Sonotrode Transversal-Wellen aber auch kombinierte longitudinal-transversal-Wellen oder torsional Wellen miteinander überlagert werden.

Die in Resonanz schwingende Sonotrode versetzt das Werkzeug in Schnittrichtung mit einer Frequenz und Amplitude ebenfalls in Schwingung. Bei der ultraschallgestützten Zerspanung von Stahl mit Diamant kommt es aufgrund dieser Schwingbewegung zur Unterbrechung des Kontakts zwischen Werkzeug (Diamant) und Werkstoff (Stahl). Normalerweise auftretende Diffusionsprozesse in der Kontaktfläche zwischen Werkzeug und Werkstoff können somit reduziert werden. Für wirtschaftlich sinnvolle Werkzeugstandzeiten des Diamanten sind Eingriffsdauern von ca. 20 % erfahrungsgemäß einzustellen. In einer Schwingsequenz sollten ca. 80% ohne Kontakt zwischen Werkzeug und Werkstoff vorliegen. Die Schwingfrequenz des Ultraschallsystems sowie die erzielbare Schwingamplitude stehen somit in direkter Korrelation zu der realisierbaren Schnittgeschwindigkeit und somit zur Wirtschaftlichkeit des Zerspanverfahrens. Nach dem Stand der Technik sind für Frequenzen von 100 kHz mit zugehörigen Schwingamplituden im Bereich von 0,5 bis 3 µm gegenüber konventioneller Zerspanung sehr langsame Schnittgeschwindigkeiten von ca. 4 m/min möglich. Die erzielbare Bauteilqualität weist hohes Potenzial auf, die ultraschallgestützte Bearbeitung ist jedoch nur in besonderen Fällen wirtschaftlich zu vertreten.

Die DE 10 2014 005 543 B3 beschreibt allgemein ein Verfahren zur ultrapräzisen Bearbeitung einer gewölbten und eisenhaltigen Negativfläche eines Formeinsatzes für die replikative Herstellung von optischen Elementen. Die DE 10 2009 027 688 A1 beschreibt eine handgehaltene Elektrowerkzeugmaschine. Die US 4,646,595 beschreibt ein Maschinenwerkzeug, bei dem das Werkzeug longitudinal auf das Werkstück zu schwingt, das von radial bearbeitet wird. Die DE 10 2008 022 993 A1 beschreibt ein Fräsverfahren zur Verbesserung der Oberflächengüte und Minimierung des Werkzeugverschleißes. Die US 2010/0086369 A1 beschreibt ein Verfahren zur Hochgeschwindigkeitsbearbeitung mit verlängerter Werkzeuglebensdauer.

Ausgehend von diesem Stand der Technik liegt der Erfindung die Aufgabe zu Grunde, ein Ultraschallsystem zu entwickeln, das eine schnellere Bearbeitung eines Werkstücks erlaubt.

Diese Aufgabe wird mit einem Ultraschallsystem mit den Merkmalen des Anspruchs 1 gelöst. Vorteilhafte Weiterbildungen sind Gegenstand der Unteransprüche.

Wenn am Werkzeug eine Schwingfrequenz von mehr als 100 und vorzugsweise mehr als 120 und besonders bevorzugt von mehr als 150 kHz vorliegt, kann die Bearbeitungsgeschwindigkeit wesentlich gesteigert werden. Um dies zu erreichen, muss jedoch das gesamte System grundlegend abweichend vom Stand der Technik mit einem neuartigen Ansatz ganzheitlich ausgelegt werden. Vorzugsweise wird das System auf eine Schwingfrequenz zwischen 100 und 350 kHz eingestellt.

Die Anregung erfolgt durch mindestens eine und vorzugsweise mehrere paarweise verbaute Piezokeramiken.

Das Werkzeug kann mono- oder polykristallin sein und ist in der Regel ein Diamant.

Der Erfindung liegt die Erkenntnis zu Grunde, dass eine Verschraubung zwischen Piezoerreger und Sonotrode, die bei Systemen mit Schwingungen bis zu 100 kHz üblich ist, durch die symmetrische Kraftverteilung einer rotationssymmetrischen Verschraubung eine Anlagefläche in einem symmetrischen Verhältnis zwischen Sonotrodenbreite und Sonotrodenlänge bedingt. Bei asymmetrischen Koppelgeometrien mit einer Verschraubung können keine gleichmäßigen Kontaktbedingungen in der Schnittstelle gewährleistet werden. Eine Verkleinerung dieser Fläche durch kleinere Schrauben führt bei Frequenzen um 100 kHz zu einer Instabilität im Betrieb in Folge von Setzungserscheinungen sowie zu geringeren realisierbaren Anpressdrücken. Dadurch, dass mit steigender Frequenz die Wellenlänge immer kleiner wird, verschlechtert sich im Vergleich bei einer symmetrischen Verschraubung zu einer asymmetrischen Fixierung das Verhältnis der Breite der Einkoppelfläche in Wellenrichtung zur Wellenlänge deutlich und dies führt zu einer negativen Beeinflussung der Schwingeigenschaften und Schwingformen im Sinne einer Verkleinerung der Schwingamplitude.

Eine besonders kritische Stelle ist der Übergang vom Piezoerreger auf die Sonotrode. Daher wird vorgeschlagen, dass das System eine Fixierfläche als Einkoppelfläche zwischen Piezoerreger und Sonotrode aufweist, die in Richtung der Wellenausbreitung in der Sonotrode eine Breite von weniger als λ/2 und vorzugsweise weniger als λ/4 der eingekoppelten Wellenlänge aufweist. Sowohl der Piezoerreger als auch die Sonotrode schwingen bei der gleichen Resonanzfrequenz. Dadurch, dass im Piezoerreger allerdings eine longitudinale Welle vorliegt, die sich mit einer anderen Geschwindigkeit ausbreitet als die transversale Welle, die in der Sonotrode liegt, ist lediglich die Schwingfrequenz gleich. Die Wellenlängen der beiden Komponenten sind jedoch unterschiedlich. Übereinstimmend ist neben der gleichen Resonanzfrequenz auch die Amplitude in der Koppelstelle. Es wird also eine Schwingung mit unveränderter Amplitude übertragen.

Eine weitere kritische Stelle ist die Fixierung des Schwingsystems. Daher wird vorgeschlagen, dass das System mindestens eine Fixierfläche für die Fixierung des Schwingsystems von Piezoerreger und Sonotrode aufweist, die eine Breite von weniger als λ/2 und vorzugsweise weniger als λ/4 der an der Fixierfläche vorliegenden Wellenlänge aufweist.

Die dritte kritische Stelle liegt zwischen Sonotrode und Werkzeug, wo ebenfalls eine Fixierfläche als Koppelfläche benötigt wird. Hier gelten die gleichen Bedingungen.

Erfindungsgemäß ist eine oder mehrere dieser Fixierflächen verschraubungsfrei thermisch oder durch Formpassung gefügt oder verschraubungsfrei als monolithischer Aufbau gebildet.

Die der Erfindung zu Grunde liegende Aufgabe wird auch durch ein Verfahren zur Auslegung eines Ultraschall-Systems gelöst, bei dem mittels einer simulationsgestützten Berechnung das Schwingsystem aus Sonotrode (transversal oder transversal und longitudinal) und Piezoerreger (longitudinal) als Einheit ausgelegt wird. Das heißt, es werden nicht einerseits die Sonotrode und andererseits der Piezoerreger optimiert sondern das schwingende Gesamtsystem wird als ein einziges System simulationsgestützt berechnet.

Dabei werden real aufgenommene Messdaten in mindestens einer gemessenen Schwingrichtung in die simulationsgestützte Berechnung einbezogen.

Stand der Technik ist eine getrennte Auslegung und Betrachtung von Erreger und Sonotrode sowie ein Verschrauben von Erreger und Sonotrode. Anschließend wird das Gesamtsystem durch Schleifen und Fräsen manuell in der vorherrschenden Resonanzfrequenz bzw. der geometrischen Schwingform nachjustiert, indem die Geometrie, vorzugsweise die Länge der Sonotrode angepasst wird.

Die Verschraubung zwischen Piezoerreger und Sonotrode als auch zwischen Sonotrode und Werkzeug erfolgt im Stand der Technik mit M3- bis M8-Schrauben. Es wären auch M 2,5-Schrauben möglich. Dies führt zu einer Anlagefläche, die für die Stabilität notwendig ist. Daher erfolgt die Anregung nicht exakt im Wellenmaximum, sondern sie erstreckt sich in den Bereich der Knotenstellen. Hierdurch entstehen Verluste im Gesamtsystem und Differenzen zwischen der unter Linienanregung theoretisch möglichen Auslegung und dem realen System, die bei Frequenzen >100 kHz überproportional zunehmen.

Wird nun die Frequenz erhöht, reduziert sich die Wellenlänge in der Sonotrode. Das Problem der "Ungenauigkeit" zwischen idealer linienweiser Anregung und einer Anregung über einen signifikanten Prozentsatz der Wellenlänge wird schlechter. Das Systemverhalten wird hierdurch bedingt sensibler und Auslegung, Abstimmung und Betrieb werden signifikant komplexer. Insbesondere können sich auch die Amplituden an der Koppelstelle verringern, was zu einer geringeren Effizienz des Systems führt.

FEM Berechnungen einzelner Glieder in der Kette, insbesondere der Sonotrode helfen das Problem zu analysieren. Und darauf aufbauend werden Sonotrode, Piezoerreger und Werkzeug verschraubt und manuell Stück für Stück dahingehend optimiert, dass eine gute Schwingeigenschaft am Werkzeug vorliegt.

Bei Frequenzen oberhalb von 100 kHz wird die Skalierung so aufwändig, dass sie technisch nach konventionell beschriebener Vorgehensweise mit händischem Abstimmen nicht mehr umsetzbar ist. Dafür dient erfindungsgemäß die simulationsgestützte Abbildung der Kopplung von einer Longitudinalschwingung am Piezoerreger zu einer Transversalschwingung an der Sonotrode bei Frequenzen oberhalb von 100 kHz.

Erfindungsgemäß wird das System auslegungstechnisch zusammen als Gesamtsystem betrachtet.

Ein erster nicht-erfindungsgemäßer Ansatz liegt in der Auslegung einer Verschraubung mit asymmetrischer Geometrie, wie beispielsweise einem Rechteck. Dies führt zu einer Reduktion der Längenausdehnung entlang der Wellenausbreitungsrichtung bzw. der Wellenlänge der Sonotrode.

Erfindungsgemäß ist keine Verschraubung vorgesehen, sondern beispielsweise ein thermisches Fügen der Koppelglieder. Dabei ist eine Beschädigung des Piezoerregers durch einen Wärmeeintrag zu vermeiden. Beim Fügen ist darauf zu achten, dass die Materialeigenschaften nicht unkontrolliert verändert werden.

Als Alternative zum thermischen Fügen oder Fügen durch Formpassung wird erfindungsgemäß ein monolithischer Aufbau vorgeschlagen, der vorzugweise durch Drahterodieren aus einem Stück erreicht wird. Dabei sollten Sonotrode und Erreger für Systemfrequenzen größer 100 kHz gemeinsam als Gesamtsystem ausgelegt werden.

Dadurch sind Schwingfrequenzen des Systems in einem Bereich zwischen 100 kHz und 350 kHz zu erreichen. Die Werkzeugbahn ist bei Anregung linear, kreisförmig, elliptisch oder eine Kombination dieser Arten. Die Werkzeuganregung erfolgt vorzugsweise durch einen longitudinal schwingenden Piezoerreger, der eine longitudinale, transversale oder torsionale Schwingung im Werkzeughalter (Sonotrode) induziert. In dem auskragenden Teil der Sonotrode werden dabei Transversal-Wellen aber auch kombinierte longitudinal-transversal-Wellen oder torsionale Wellen miteinander überlagert.

Die Anregungsart wirkt bei einer Steigerung der Schwingfrequenz sensitiver auf die Schwingungsform. Dem wird durch eine Reduktion der Anregungsfläche im Übergangsbereich zwischen Piezoerreger und auskragender Sonotrode auf unter λ/2, vorzugsweise unter λ/4 entgegengewirkt. Dabei erfolgt die Anregung an mindestens einem, oder wahlweise an mehreren Schwingungsbäuchen der Wellen in Ausbreitungsrichtung der Wellenform.

Eine FEM-gestützte Auslegung des Schwingsystems als Gesamtsystem bestehend aus longitudinal schwingendem Piezoerreger und longitudinal, transversal, torsional oder in kombinierter Schwingform schwingender Sonotrode ist für ein oben beschriebenes System fast unumgänglich. Besser ist eine FEM-gestützte Auslegung mittels eines automatisierten Optimierungsalgorithmus. Idealerweise wird diese Auslegung mit einer Rückführung von Messdaten in die Simulation kombiniert. Dies wird beispielsweise durch eine Wegmessung über der Zeit in mindestens einer Richtung, idealerweise zeitlich synchron in mehreren Richtungen zur Bestimmung der räumlichen Schwingform des Werkzeugs erreicht. Die Messung erfolgt dabei etwa durch ein Laservibrometer oder einen vergleichbaren Sensor, der in der Lage ist, ein Weg-Zeit-Signal für Frequenzen oberhalb von 100 kHz aufzunehmen. Vorteilhaft ist es dabei, zwei oder mehr der oben beschriebenen Sensoren zu nutzen, um räumliche Oszillationen zu messen. Dabei müssen die Sensoren zeitlich synchron im Wegsignal ausgewertet werden.

Das Ultraschall-Schwingsystem ist dabei in mindestens einem, vorzugsweise in mehr als einem Schwingungsknoten der ausgebildeten Wellen bei Schwingung entweder an der Sonotrode oder dem Piezoerreger, sowie einer Kombination beider Lagerungsarten gelagert.

Vorteilhaft ist die präzise messtechnische Bestimmung der realen Knotenstellen zur Fixierung, um die Schwingform nicht negativ zu beeinflussen. Die messtechnische Bestimmung geschieht nach Auslegung und Abstimmung des gesamten Resonanzsystems.

Die Fixierungsfläche hat dabei eine Länge oder einen Durchmesser von vorzugsweise < λ/2, idealerweise << λ /4. Dies wird durch Pressung, thermisch gefügte oder monolithische Kegelformen, Zylinderformen oder Rechteckformen erreicht. Zur Verbesserung der Fixierung kann die Anzahl der Knotenstellen sowohl in der auskragenden Sonotrode als auch im Piezoerreger durch eine geometrische Anpassung erhöht werden. Zur Einsparung von Bauraum können wahlweise umlenkende Zwischenstücke eingesetzt werden, die an einem oder mehreren Punkten der auskragenden Sonotrode gekoppelt sind. An Stelle einer symmetrischen Koppelgeometrie wird eine asymmetrische Koppelgeometrie mit reduzierter Länge in Richtung der Wellenausbreitungsrichtung verwendet, um die Effizienz zu erhöhen und den Fehlereinfluss zwischen der Auslegung und dem realen Systemverhalten zu reduzieren. Zur Erhöhung der Quersteifigkeit können mehrere Fixierstellen vorgesehen sein.

Abweichend von der Koppelfläche zwischen Piezoerreger und Sonotrode wird für die Fixierung des Schwingsystems geometrisch eine Kegel-, eine Zylinder-, eine Rechteckform, oder eine Ringform gewählt. Die jeweiligen geometrischen Ausprägungen können thermisch gefügt bzw. monolithisch ausgelegt sein. Neben Schwingfrequenz und Schwingweg des Werkzeugs (linear, elliptisch, zirkulär) ist die Systemsteifigkeit relevant. Je mehr Fixierungen der Sonotrode vorliegen, desto besser ist die Steifigkeit, insbesondere quer zu Sonotrode. Dies führt aber auch zu mehr Systemdämpfung und Verlusten im System, wie insbesondere einer Verringerung der Schwingamplituden und somit einer Verringerung der Bearbeitungsgeschwindigkeit etwa wegen nicht ideal getroffenen Fixier- und Koppelpunkten.

Deshalb ist erstens auf ein präzises Greifen in den Knotenstellen ohne Amplitude mit möglichst wenig "Übergreifen" in der Wellenlänge zu achten. Außerdem ist es vorteilhaft, wenn nur ein Angriffspunkt und maximal 2 Angriffspunkte vorliegen. Diese Angriffspunkte sollten so ausgeführt sein, dass sie in Richtung der Welle kürzer sind als quer zur Erstreckung der Welle. Eine knotenpunktartige Fixierung ist ideal. Dabei ist eine monolithische Verbindung einer Verschraubung vorzuziehen, um dieses theoretische Optimum bestmöglich zu erzielen.

Bisher wird aufgrund von Differenzen zwischen Auslegung und realem Systemverhalten immer erst die Sonotrode real auf Knotenstellen gemessen und dann wird die Halterung für eine präzise Fixierung angepasst.

Besonders gute Ergebnisse wurden mit einer gerichteten, das heißt simulationsgestützten Nutzung der Eigenschwingformen des verwendeten Werkzeugs erreicht. Hierfür wird die Gestaltung des Werkzeuggrundkörpers variiert. Dabei können herkömmliche Wendeschneidplattenformen, gekürzte oder modifizierte Wendeschneidplattenformen eingesetzt werden. Die Bearbeitungsschneide kann direkt auf das schwingende Ende der Sonotrode aufgebracht werden. Der Werkzeugkörper kann an den Schwingkörper mittels Verschraubung, Klemmung oder thermischen Fügens angebracht werden. Die Oberflächengestalt und Rauheit können zur Beeinflussung der Effizienz der Kopplung adaptiert werden und die Auflage- und Koppelfläche kann zur Modifikation der Schwingform des angebundenen Werkzeugs adaptiert werden.

Weitere Möglichkeiten bietet eine Überwachung der Prozessfähigkeit im ultraschallgestützten Prozess bei einer Anregungsfrequenz über 40 kHz durch einen AE (acoustic emission) Sensor. Dabei kann der Sensor werkzeugseitig oder bauteilseitig angebracht sein und er kann die Schwingfrequenz überwachen und es kann ein Ankratzen mittels eines Acoustic Emission Sensors erfolgen.

Mehrere Systeme sind in den Figuren dargestellt und werden im Folgenden näher erläutert. Es zeigt
- Figur 1: schematisch eine dreidimensionale Ansicht eines Ultraschallsystems mit Piezoerreger, Sonotrode und Werkzeug,
- Figur 2: das in Figur 1 gezeigte Ultraschallsystem in einer Halterung,
- Figur 3: schematisch die Schwingungen in dem in Figur 1 gezeigten Ultraschallsystem,
- Figur 4: schematisch die Breite der Einkoppelstelle zwischen Piezoerreger und Sonotrode,
- Figur 5: schematisch die Schwingungen in einem Ultraschallsystem mit einem Piezoerreger parallel zur Sonotrode,
- Figur 6: schematisch die Schwingungen in einem Ultraschallsystem mit einem Piezoerreger mit zwei Einkoppelstellen,
- Figur 7: schematisch die Schwingungen in einem Ultraschallsystem mit einem Piezoerreger in Ausrichtung eines Armes einer Sonotrode und einer Einkoppelstelle und
- Figur 8: schematisch die Schwingungen in einem Ultraschallsystem mit einem Piezoerreger in Ausrichtung eines Armes einer Sonotrode und zwei Einkoppelstellen.

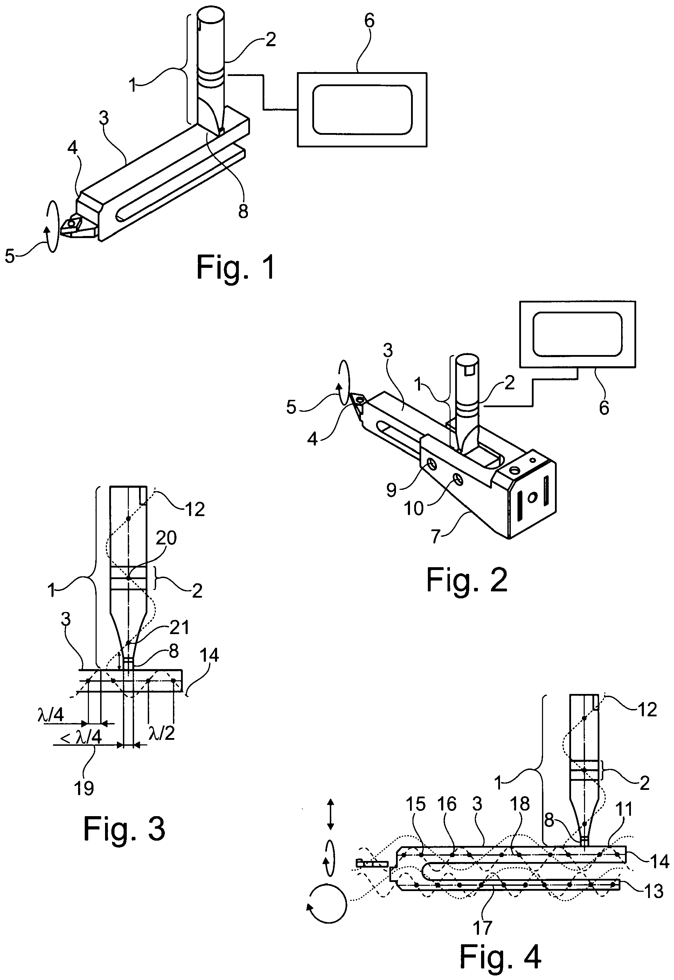

Der in Figur 1 gezeigte nicht parallel angeordnete (orthogonal oder unter einem Winkel) Piezoerreger 1 weist Piezokeramiken 2 auf, die mit einem Ultraschallgenerator 6 in Verbindung stehen. An der Koppelstelle 8 ist der Piezoerreger 1 mit der Sonotrode 3 verbunden. An der Sonotrode 3 ist ein Bearbeitungswerkzeug 4 befestigt, das in einer speziellen Form 5 schwingt. Das Bearbeitungswerkzeug 4 ist ein Diamant mit einer Wendeschneideplatte. Es können aber auch herkömmliche Schneidplatten verwendet werden.

Die Figur 3 zeigt die Wellenlängenverteilung transversal in der in Figur 1 gezeigten Sonotrode 3, die einer ILSonic Sonotrode entspricht, sowie im Piezoerreger 1 longitudinal. Am Piezoerreger 1 liegt somit eine longitudinale Schwingung 11,12 parallel zur Ausbreitungsrichtung vor und an der Sonotrode liegt eine transversale Schwingung 13, 14 senkrecht zur Ausbreitungsrichtung. Daraus folgen übereinstimmende Schwingungsrichtungen in der Koppelstelle 8. Als Schwingungen 13, 14 der auskragenden Sonotrode sind die Wellen der oberen und unteren Sonotrodengeometrie mit jeweiligen Maxima und sogenannten Knotenstellen 15, 16, dem Durchgang der Welle 13, 14 durch die Nulllinie 17, 18, zu erkennen. An den Knotenstellen 15, 16 liegt keine Amplitude vor. Wenn eine Sonotrode 3 in einer Aufnahme 7 gehalten werden soll, wird sie an einer Knotenstelle 15,16 befestigt. Die Koppelstelle 8 zwischen Piezoerreger 1 und Sonotrode 3 sollte in einem Maximum der Amplitude der Transversalschwingung 14 liegen.

Diese Koppelstelle 8 zwischen Piezoerreger 1 und Sonotrode 3 ist idealerweise entlang der Schwingung ein Linienkontakt in einem Schwingungsmaximum. Für die Fixierung in einer Knotenstelle der Sonotrode wird idealerweise ein Punktkontakt angestrebt, der technisch aber nicht umsetzbar ist. Zu nutzen sind möglichst kleine Kontaktflächen mit < λ/2, idealerweise << λ/4.

Daher hat die Koppelstelle 8 in Längsrichtung der Sonotrode 3 eine Breite 19 von λ /4 oder sogar noch weniger. Die Ausdehnung in der Läge quer zur Längsrichtung der der Sonotrode ist weit größer.

Gleiches gilt entsprechend für die Fixierung des Piezoerregers an den Knotenstellen 20, 21.

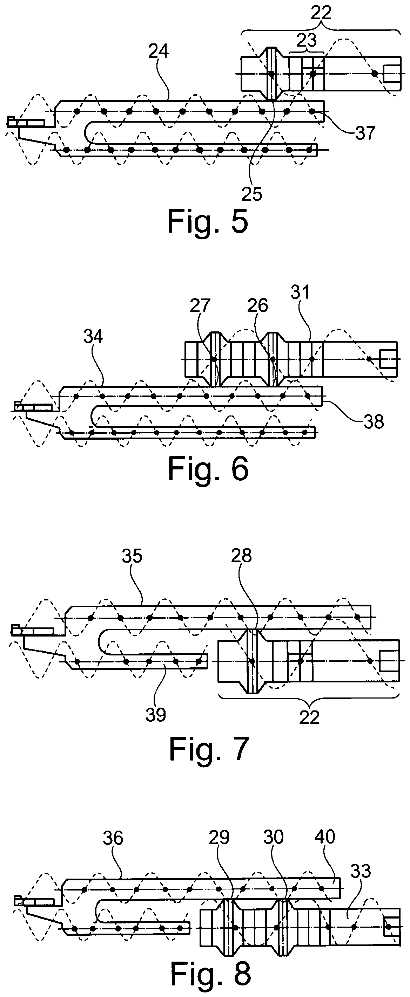

Die Figuren 5 bis 8 zeigen, wie ein parallel angeordneter Piezoerreger 22 mit einer Piezokeramik 23 mit einer Sonotrode 24 über einen oder mehrere Koppelpunkte 25 bis 30 verbindbar ist. Dabei ist der Piezoerreger 22, 31, 32, 33 parallel zur Sonotrode 24, 34, 35, 36 angeordnet und steht jeweils nur mit einem Arm 37 bis 40 der Sonotrode in Verbindung.

## Patentansprüche

1. Ultraschall-System zur zerspanenden Bearbeitung mit einem Werkzeug (4), einer Sonotrode (3) und einem Piezoerreger (1), bei dem in einem auskragenden Teil der Sonotrode Transversal-Wellen aber auch kombinierte longitudinal-transversal-Wellen oder torsionale Wellen miteinander überlagert werden, wobei am Werkzeug (4) eine Schwingfrequenz von mehr als 120 kHz vorliegt und **dadurch gekennzeichnet, dass** das System zwischen Piezoerreger (1) und Sonotrode (3) eine Fixierfläche als Koppelfläche (8) aufweist, die verschraubungsfrei thermisch oder durch Formpassung gefügt oder verschraubungsfrei als monolithischer Aufbau gebildet ist.

2. Ultraschall-System nach Anspruch 1, **dadurch gekennzeichnet, dass** die Koppelfläche (8) in Längsrichtung der Sonotrode (3) eine Breite von weniger als λ/2 der eingekoppelten Wellenlänge aufweist.

3. Ultraschall-System nach einem der vorhergehenden Ansprüche, **dadurch gekennzeichnet, dass** die Koppelfläche (8) in Längsrichtung der Sonotrode (3) eine Breite (19) von λ/4 der eingekoppelten Wellenlänge oder weniger aufweist und die Ausdehnung der Koppelfläche (8) in der Länge quer zur Längsrichtung der Sonotrode (3) weit größer ist.

4. Ultraschall-System nach einem der vorhergehenden Ansprüche, **dadurch gekennzeichnet, dass** die Koppelfläche (8) in einem Maximum der Amplitude der überlagerten Transversal-Wellen liegt.

5. Verfahren zur Auslegung eines Ultraschall-Systems nach einem der vorhergehenden Ansprüche, **dadurch gekennzeichnet, dass** durch eine simulationsgestützte Berechnung das Schwingsystem aus Sonotrode (3) und Piezoerreger (1) als Einheit ausgelegt wird, wobei real aufgenommene Messdaten in mindestens einer gemessenen Schwingrichtung in die simulationsgestützte Berechnung einbezogen werden.

## Claims

1. An ultrasonic system for machining processing, comprising a tool (4), a sonotrode (3) and a piezoelectric exciter (1), in which both transverse waves and combined longitudinal-transverse waves or torsional waves are superimposed on one another in a cantilevered part of the sonotrode, wherein
an oscillation frequency of more than 120 kHz is present on the tool (4) and
**characterized in that**
between the piezoelectric exciter (1) and the sonotrode (3), the system comprises a fixation surface as a coupling surface (8), which is joined without a screw connection either thermally or by means of a form fit, or formed as a monolithic structure without a screw connection.

2. The ultrasonic system according to Claim 1, **characterized in that** the coupling surface (8) has a width of less than λ/2 of the coupled-in wavelength in the longitudinal direction of the sonotrode (3).

3. The ultrasonic system according to any of the preceding claims, **characterized in that** the coupling surface (8) has a width (19) of λ/4 of the coupled-in wavelength or less in the longitudinal direction of the sonotrode (3) and the extent of the coupling surface (8) in the length transversely to the longitudinal direction of the sonotrode (3) is much greater.

4. The ultrasonic system according to any of the preceding claims, **characterized in that** the coupling surface (8) is located at a maximum of the amplitude of the superimposed transverse waves.

5. A method for designing an ultrasonic system according to any of the preceding claims, **characterized in that** a simulation-assisted calculation is used to design the oscillator system consisting of sonotrode (3) and piezoelectric exciter (1) as a unit, wherein real recorded measurement data in at least one measured oscillation direction are included in the simulation-assisted calculation.

## Revendications

1. Système à ultrasons pour l'usinage par enlèvement de copeaux avec un outil (4), une sonotrode (3) et un excitateur piézoélectrique (1), pour lequel des ondes transversales mais également des ondes longitudinales-transversales combinées ou des ondes torsionnelles sont superposées entre elles dans une partie en surplomb de la sonotrode, sachant qu'une fréquence d'oscillations de plus de 120 kHz est présente sur l'outil (4) et ***caractérisé* en ce *que*** le système comporte entre l'excitateur piézoélectrique (1) et la sonotrode (3) une surface de fixation en tant que surface de couplage (8), qui est assemblée sans vissage thermiquement ou par adaptation de forme ou est formée sans vissage sous la forme d'une structure monolithique.

2. Système à ultrasons selon la revendication 1, ***caractérisé* en ce *que*** la surface de couplage (8) comporte dans la direction longitudinale de la sonotrode (3) une largeur inférieure à λ/2 de la longueur d'onde injectée.

3. Système à ultrasons selon l'une quelconque des revendications précédentes, ***caractérisé* en ce *que*** la surface de couplage (8) comporte dans la direction longitudinale de la sonotrode (3) une largeur (19) de λ/4 de la longueur d'onde injectée ou moins et l'extension de la surface de couplage (8) est largement plus grande dans la longueur transversalement à la direction longitudinale de la sonotrode (3).

4. Système à ultrasons selon l'une quelconque des revendications précédentes, ***caractérisé* en ce *que*** la surface de couplage (8) se situe dans un maximum de l'amplitude des ondes transversales superposées.

5. Procédé destiné à la conception d'un système à ultrasons selon l'une quelconque des revendications précédentes, ***caractérisé* en ce *que*** le système oscillant composé d'une sonotrode (3) et d'un excitateur piézoélectrique (1) est conçu sous la forme d'une unité par un calcul assisté par simulation, sachant que des données de mesure réellement enregistrées sont prises en compte dans le calcul assisté par simulation dans au moins une direction d'oscillation mesurée.
